# EUROPEAN PATENT APPLICATION

(11) **EP 3 306 973 A1**
(43) Date of publication of application: **11.04.2018**
(21) Application number: 16192937.7
(22) Date of filing: 07.10.2016
(51) Int. Cl.: H04W 24/00

(54) **TEST DEVICE AND METHOD**

(71) Applicant: Rohde & Schwarz GmbH & Co. KG, 81671 München (DE)
(72) Inventor: Berger, Jens, 4533 Riedholz (CH)
(74) Representative: Isarpatent

(57) **Abstract**

The present invention provides a test system (1, 10) for testing a wireless network (2, 11), the system comprising a plurality of single testing units (3, 4, 13, 14, 30, 31), each one of the testing units (3, 4, 13, 14, 30, 31) being configured to controllably perform network tests in the wireless network (2, 11), and each one of the testing units (3, 4, 13, 14, 30, 31) comprising a communication interface (5, 6, 15, 16), wherein the plurality of testing units (3, 4, 13, 14, 30, 31) is configured to be coupled via the communication interface (5, 6, 15, 16), such that in a coupled stated the plurality of testing units (3, 4, 13, 14, 30, 31) form a single logical test device (7, 21), which performs a common network test in the wireless network (2, 11) and delivers a single test result (8, 22). The present invention further provides a corresponding method.

## Description

### TECHNICAL FIELD

The invention relates to a test device for testing a wireless network and a corresponding method.

### BACKGROUND

Although applicable to any wireless data transmission system, the present invention will be described mainly in combination with mobile phone networks.

Mobile phone networks usually consist of a plurality of wireless network cells, which are interconnected by a wired network. When installing or maintaining the wireless network cells, it is necessary to test the quality of the wireless network cells, e.g. in terms of data transmission speed.

One possible approach for testing network data transmission performance is downloading or uploading data files from a server with a user's equipment, UE, and measuring the download or upload time. The data transmission speed of the wireless network cell can then be calculated based on the file size and the download or upload time.

These tests are known as so-called "speed tests" and are available as computer programs, applications on the UE or as web-based services.

In today's wireless networks a single UE can usually process the full transmission capacity of a wireless network cell or network node by its own.

Along with next generation networks the transmission capacity of a single cell may increase up to values, which cannot be processed by a single UE anymore. Therefore, either the processing capacity of the single UEs has to be increased or specialized testing equipment with large processing capacities has to be designed.

### SUMMARY

Therefore, there is a need for a simple method for testing high speed wireless network cells.

This problem is solved with the features of the independent claims.

Accordingly, a test system for testing a wireless network comprises a plurality of single testing units, each one of the testing units being configured to controllably perform network tests in the wireless network, and each one of the testing units comprising a communication interface, wherein the plurality of testing units is configured to be coupled via the communication interface, such that in a coupled stated the plurality of testing units form a single logical test device, which performs a common network test in the wireless network and delivers a single test result.

Further, a test method for testing a wireless network comprises providing a plurality of single testing units, each one of the testing units being configured to controllably perform network tests in the wireless network, coupling the testing units to form a single logical test device, and performing a common network test in the wireless network and delivering a single test result with the single logical test device.

The test system comprises a plurality of testing units, i.e. two or more. Every single one of the testing units is capable of performing specific network tests in the wireless network. Such tests can e.g. comprise downloading a file from or uploading the file to a server, whose address may be configurable. Other tests my refer to measuring the network latency or "ping" or to measuring signal quality in the wireless network.

For performing the network tests, a test connection may be established between the single testing units and other nodes, like e.g. the respective servers, from which e.g. data files are downloaded.

As already indicated above, in future wireless network systems, the bandwidth may be higher than in today's wireless networks. Single user equipment devices will probably not be able to process such an increased bandwidth, at least not for a long time period without throttling e.g. the processor clock to prevent overheating and therefore reducing the data rate.

The present invention is based on the idea of performing separate network tests in parallel. The present invention therefore distributes the load of e.g. a transmission capacity test to more than one physical device or testing unit. This enables the use of testing units, which are not able to process the deliverable amount of data in a wireless network cell by their own.

It is understood, that the single testing units may comprise any type of necessary wireless interface to communicate with the wireless network infrastructure and to perform the necessary tests.

If the tests are performed independently with different testing units, it will be difficult to coordinate the single testing units and to analyze the test results.

The present invention therefore provides the single testing units with a communication interface, which allows to interconnect the single testing units to each other. The single testing units therefore form a network of testing units. This network of testing units allows e.g. synchronizing the testing units and therefore performing a common network test with the plurality of testing units.

Since the single testing units seem to be a single logical testing device to an external network node, the test results can e.g. be retrieved as a single common test result and can therefore easily be analyzed. Single logical test device in this context can mean that the single testing units to an external entity, like a server or a user, appear like a single unit, e.g. regarding access and control or data retrieval.

If for example a load test is performed in the wireless network, the single test units can all download a data file, i.e. the same file or different files, and the resulting data rates can all be accumulated to form an overall data rate as the single common test result.

The present invention therefore provides a possibility to thoroughly test a wireless network e.g. with very high data rates with simple testing units, which also can be re-used separately for performing other network tests, which do not require the combined processing or wireless capacities of the plurality of testing units.

Further embodiments of the present invention are subject of the further subclaims and of the following description, referring to the drawings.

In a possible embodiment, the test system can further comprise a central test coordinator, which is configured to communicate with the single testing units and control the single testing units to couple to each other to form the single logical test device, and to commonly start and/or stop a network test.

The central test coordinator can also control the single testing units to detach from the other testing units, i.e. not forming a logical test device any more. Further, the test coordinator can comprise a central access to the logical test devices or a user interface, which allows e.g. a test engineer to configure the logical test device.

For example, the central test coordinator can provide the user with a list of available testing units. The user can then select via the user interface groups of the testing units, which are to form a single logical test device. The central test coordinator can also allow the user to form multiple groups of testing units, i.e. multiple logical test devices.

In a possible embodiment, the central test coordinator can be configured to communicate directly with every single testing unit of a logical test device to transmit control commands to the testing units. If the central test coordinator can communicate directly with the single testing units, a very simple communication scheme can be used and the overhead in the single testing units is low. In addition, a unified access to the single testing units, which form the logical test device, can be provided in the central test coordinator.

In a possible embodiment, at least one of the testing units can comprise a local test coordinator, which is configured to coordinate the single testing units, which form a logical test device. A local test coordinator, which takes over control of the single testing units, may e.g. replace or enhance the central test coordinator. If a local test coordinator is used, the data communication with the single testing units may be performed via the local test coordinator. To a user the complexity of the interconnected testing units can be hidden and the logical test device will appear as a single test device, which can be accessed via the testing unit with the local test coordinator.

It is further possible for the central test coordinator or the local test coordinator to detect the single testing units and perform an auto-configuration of all testing units. The local test coordinator can e.g. detect the single testing units by sending broadcast messages and receiving respective answer messages or by contacting a server, which lists all available testing units.

No matter if a central or a local test coordinator is used, all the testing units, which form a logical test device, can perform local measurements while performing a network test and forward the respective measurement results to the respective test coordinator. The test coordinator can then calculate the single test result based on the different measurement results. In case of a speed test e.g. all the testing units can perform local data rate measurements and provide their local results to the test coordinator. The test coordinator can then accumulate or sum the local or single results to calculate the final test result.

In a possible embodiment, the testing units each can comprise a test synchronizer, which is configured to synchronize the respective testing unit with the other testing units in the coupled state. Synchronizing in this context refers to the synchronized performing of any action, like e.g. starting of e.g. a file download, i.e. a speed test or transmission rate test.

For example, if the central test coordinator sends a command to the logical test device to initiate a test, the command may be delayed on the way to the single testing units, which form the logical test device. If the command is delayed by different amounts of time until it reaches the single test units, the single test units will start the test at different times.

In such a case, the test synchronizer serves to synchronize the start of the test throughout all the single testing units. The test synchronizer can e.g. delay the start of the test in the testing units, which receive the command first, until the command is received at all testing units. The test synchronizers in the testing units can also establish a common time base and the commands can include a start time in the common time base for a test. This will allow all testing units to initiate a network test at the same time.

In a possible embodiment, each one of the testing units can comprise a user equipment, e.g. a smartphone, for the wireless network and an application installed on the user equipment, which implements the functionality of the testing unit. If the functionality of the testing units is implemented as an application on a user equipment, like e.g. a smartphone, the test system can easily be scaled and built upon readily available and therefore cheap hardware. Further, the application can easily be adapted or corrected and updated on the user equipment, without the need to redesign any hardware.

In a possible embodiment, the communication interfaces of the testing units can be configured to connect to an infrastructure of the wireless network, and the communication interfaces of the testing units can be configured to synchronize the data transmission in a coupled state such that the single communication interfaces appear to the network infrastructure as a single communication interface of a user equipment of the wireless network. If the communication interfaces of the single testing units synchronize, the logical test device appears to the network infrastructure, e.g. a base station, as a single test device with huge processing and bandwidth capacities.

This allows integrating the logical test device transparently into the wireless network, i.e. without the wireless network noticing more than one device.

In a possible embodiment, the testing units can comprise a wired synchronization interface, which is configured to communicatively couple the testing units, which form a logical test device, wherein the testing units can be configured to evenly distribute between the testing units via the wired synchronization interface the data received via the communication interfaces. For example the communication interface of one testing unit can be used for sending data to the wireless network infrastructure, while other communication interfaces can be used to receive data from the wireless network infrastructure.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of an embodiment of a test system according to an embodiment of the present invention;
- Fig. 2: shows a block diagram of another embodiment of a test system according to an embodiment of the present invention;
- Fig. 3: shows a block diagram of an embodiment of testing units according to an embodiment of the present invention; and
- Fig. 4: shows a flow diagram of an embodiment of a test method according to an embodiment of the present invention.

In the figures like reference signs denote like elements unless stated otherwise.

### DETAILED DESCRIPTION OF THE DRAWINGS

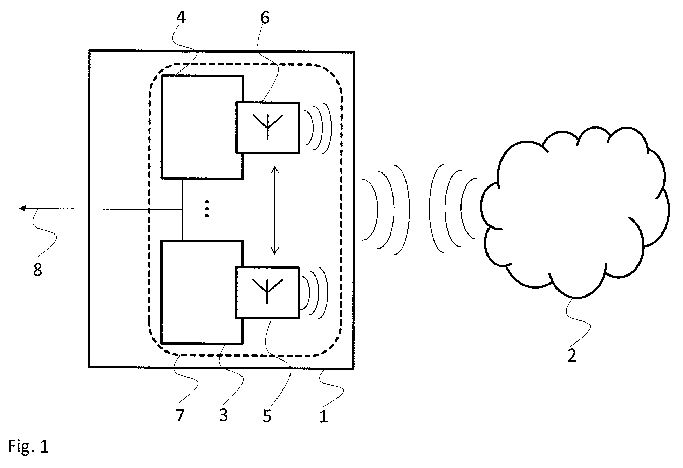

The test system 1 of Fig. 1 for testing wireless network 2 comprises a plurality of testing units, wherein for sake of simplicity only two testing units 3 and 4 are shown. It is understood that any number of testing units is possible. The testing units 3, 4 each comprise a communication interface 5, 6, which serves to communicate with the wireless network 2 and to wirelessly couple the testing units 3, 4 together. In the coupled state the testing units form a single logical test device 7.

Each one of the testing units 3, 4 can perform predetermined tests with the wireless network 2, which can e.g. be a mobile phone network 2 or cell phone network 2. Possible tests can e.g. be download rate or speed tests, latency tests or the like.

In the coupled state the testing units 3, 4 form the logical test device 7. The purpose of the logical test device 7 is to perform a network test with the testing units 3, 4 collectively, e.g. as if only a single testing device was present. The single testing units 3, 4 may be low powered in regards of processing power to process the full data rate of a modern wireless network 2. A single testing unit 2 will therefore not be sufficient to perform a full speed data rate test with the wireless network 2.

The logical test device 7 allows combining simple testing units 3, 4 into a stronger logical test device 7. Such a logical test device 7 can then e.g. perform a speed test with the wireless network 2 and continuously process the maximum data rate of the wireless network 2.

The single testing units 3, 4 can e.g. comprise a processing unit, which performs the coupling of the testing units 3, 4 via the communication interfaces 5, 6. Coupling may refer e.g. to the exchange of data or information, which is necessary for appearing as a single logical test device 7.

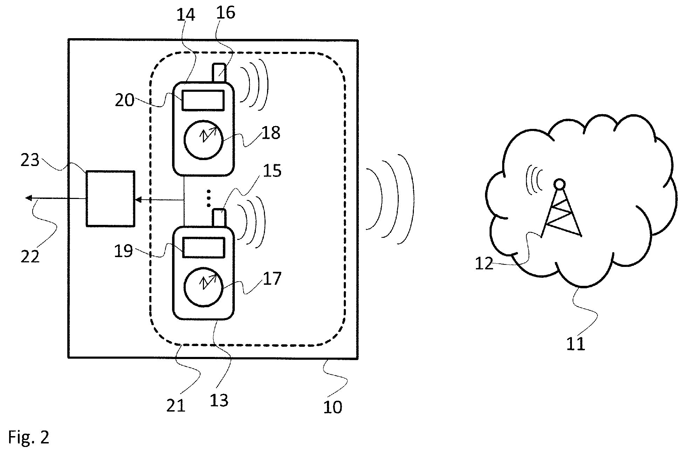

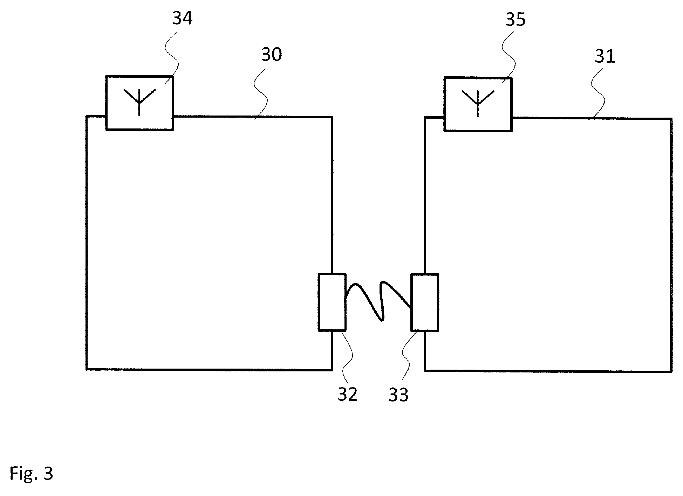

In the simplest form, the combining or coupling consist in managing the parallel measurements of the single testing units 3, 4 and providing a single test result 8. More sophisticated ways of combining or coupling the single testing units 3, 4 can comprise synchronization mechanism and/or central control and user interface devices. This will be described in more depth in conjunction with Figs. 2 and 3.

The logical test device 7 can e.g. be used to perform a speed test with the wireless network 2, where all the combined or coupled testing units 3, 4 perform a download e.g. of a file in parallel. Every testing unit 3, 4 will achieve a specific download rate. The single test result 8 can then e.g. be calculated as the sum of all of the single unit specific download rates.

The testing units 3, 4 can e.g. be provided with configuration parameters, which indicate the file to be downloaded. The file can e.g. be the same for all testing units 3, 4. As an alternative, different files can be configured for the single testing units 3, 4.

The test system 10 of Fig. 2 is based on the test system 1 of Fig. 1. In the test system 10 the single testing units are provided as user equipment, in this case smartphones 13 and 14. The smartphones 13, 14 are provided with an application 19, 20 or app, which can e.g. simply be installed in the respective smartphone's 13, 14 memory and be executed by the smartphone's 13, 14 operating system.

The application 19, 20 can provide all functions, which are necessary for performing the required tests with the wireless network 2, which schematically comprises a base station 12 for communication with the smartphones 13, 14. The application 19, 20 can further provide any functions, which are required to couple the smartphones 13, 14 as a single logical test device 21.

In Fig. 2 a central test coordinator 23 is provided, which manages the smartphones 13, 14 and e.g. commands the smartphones 13, 14 to initiate a test or report the single individual test results. The central test coordinator 23 will then compute the single test result 22, e.g. sum single data rates, to provide the single test result 22. It is understood, that the function of the central test coordinator 23 can also be provided as an application or as an extension of the applications 19, 20 in one of the smartphones 13, 14. In that case, one of the smartphones 13, 14 will be a kind of master device, which manages the further smartphones.

The communication between the single smartphones 13, 14 and the smartphones 13, 14 with the central test coordinator 23 can either be a direct communication, e.g. a point to point communication, or an indirect communication, e.g. via a server, e.g. on the internet.

In Fig. 2 the smartphones 13, 14 further comprise an internal clock or test synchronizer 17, 18. The test synchronizer 17, 18 serves to synchronize the single smartphones 13, 14. The test synchronizers 17, 18 can e.g. establish a common time base for the smartphones 13, 14 and initiate the tests in the smartphones 13, 14 at the same time. For establishing the common time base any clock synchronization protocol can be used.

The central test coordinator 23 can e.g. provide a user interface (not explicitly shown), which allows a user to group the smartphones 13, 14 into logical test devices 21. Further, the user interface can allow the user to initiate tests and retrieve the test results. The user interface can e.g. be a web-based user interface, a dedicated application or an API.

With the help of the applications 19, 20 and a central test coordinator 23 it is e.g. possible for a network provider to ship smartphones 13, 14 with the applications 19, 20 preinstalled or a firmware with the respective functionality and use the central test coordinator 23 to initiate network wide tests. The central test coordinator 23 can e.g. provide information to the user, e.g. a test engineer, about the cell with which a respective smartphone 13, 14 is coupled. This allows the user to filter and/or group specific smartphones 13, 14 as required to perform specific tests.

Fig. 3 shows a further embodiment of testing units 30, 31. The testing units 30, 31 are just shown schematically and can comprise any features of the testing units 3, 4 or 13, 14 described above. The testing units 30, 31 further each comprise a wired synchronization interface 32, 33. This wired synchronization interfaces 32, 33 can be directly or indirectly interfaced internally with the respective communication interfaces 34, 35. The communication interfaces 34, 35 can e.g. comprise communication controllers (not shown separately), which can use the wired synchronization interfaces 32, 33 to synchronize the communication with the respective wireless network, such that the single communication interfaces 32, 33 appear to the communication network as a single user equipment.

This will allow testing the wireless network as if only one user equipment was present and therefore identifying different behavior of the network with a single user equipment or multiple separate user equipment devices, which than aggregate their single test results.

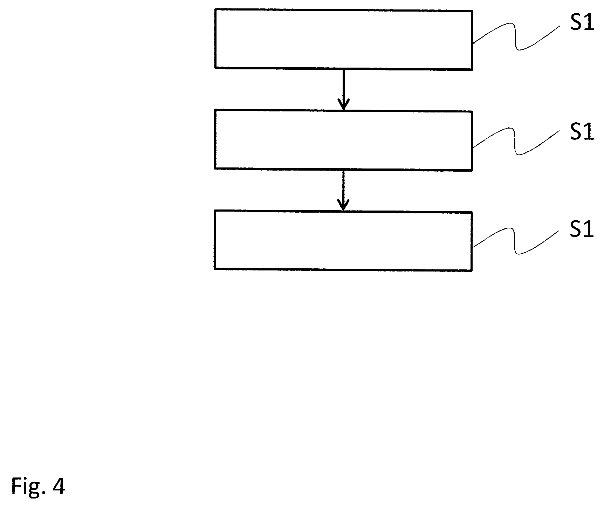

Fig. 4 shows a flow diagram of a test method for testing a wireless network 2, 11.

The method comprises providing S1 a plurality of single testing units 3, 4, 13, 14, 30, 31, each one of the testing units 3, 4, 13, 14, 30, 31 being configured to controllably perform network tests in the wireless network 2, 11. The method further comprises coupling S2 the testing units 3, 4, 13, 14, 30, 31 such that in a coupled stated the plurality of testing units 3, 4, 13, 14, 30, 31 form a single logical test device 7, 21. Finally, the method also comprises performing S3 a common network test in the wireless network 2, 11 and delivering a single test result 8, 22 with the single logical test device 7, 21.

The testing units 3, 4, 13, 14, 30, 31, which form a logical test device 7, 21, can e.g. be synchronized, especially regarding timing, for performing the test.

The testing units 3, 4, 13, 14, 30, 31 can also synchronize the data transmission in a coupled state such that the single testing units 3, 4, 13, 14, 30, 31 appear to the network infrastructure 12 as a single user equipment of the wireless network 2, 11. The testing units 3, 4, 13, 14, 30, 31 can e.g. comprise a wired synchronization interface 32, 33, which communicatively couples the testing units 3, 4, 13, 14, 30, 31, which form a logical test device 7, 21, and wherein the testing units 3, 4, 13, 14, 30, 31 evenly distribute the received data between the testing units 3, 4, 13, 14, 30, 31 via the wired synchronization interface 32, 33.

The test method can also comprise communicating from a central test coordinator 23 or a local test coordinator with the single testing units 3, 4, 13, 14, 30, 31 and controlling the single testing units 3, 4, 13, 14, 30, 31 to couple to each other to form the single logical test device 7, 21, and to commonly start and/or stop a network test. Communicating with the testing units 3, 4, 13, 14, 30, 31 can e.g. comprises communicating directly with every single testing unit 3, 4, 13, 14, 30, 31 of a logical test device 7, 21 to transmit control commands to the testing units 3, 4, 13, 14, 30, 31. The control command can e.g. refer to starting or stopping a test, or comprise a request for transmission of the results or the like.

The method can e.g. be performed on a plurality of user equipment devices 13, 14 for the wireless network 2, 11 and with the help of an application 19, 20 installed on the user equipment 13, 14, which implements the functionality of the testing unit 3, 4, 13, 14, 30, 31.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

### List of reference signs

- 1: test system
- 2: wireless network
- 3: testing unit
- 4: testing unit
- 5: communication interface
- 6: communication interface
- 7: logical test device
- 8: single test result

- 10: test system
- 11: wireless network
- 12: infrastructure
- 13: testing unit, user equipment
- 14: testing unit, user equipment
- 15: communication interface
- 16: communication interface
- 17: test synchronizer
- 18: test synchronizer
- 19: application

- 20: application
- 21: logical test device
- 22: single test result
- 23: central test coordinator

- 30: testing unit
- 31: testing unit
- 32: wired synchronization interface
- 33: wired synchronization interface
- 34: communication interface
- 35: communication interface

- S1, S2, S3: method steps

## Claims

1. Test system (1, 10) for testing a wireless network (2, 11), the test system comprising:
a plurality of single testing units (3, 4, 13, 14, 30, 31), each one of the testing units (3, 4, 13, 14, 30, 31) being configured to controllably perform network tests in the wireless network (2, 11), and each one of the testing units (3, 4, 13, 14, 30, 31) comprising a communication interface (5, 6, 15, 16),
wherein the plurality of testing units (3, 4, 13, 14, 30, 31) is configured to be coupled via the communication interface (5, 6, 15, 16), such that in a coupled state the plurality of testing units (3, 4, 13, 14, 30, 31) form a single logical test device (7, 21), which performs a common network test in the wireless network (2, 11) and delivers a single test result (8, 22).

2. Test system according claim 1, further comprising a central test coordinator (23), which is configured to communicate with the single testing units (3, 4, 13, 14, 30, 31) and control the single testing units (3, 4, 13, 14, 30, 31) to couple to each other to form the single logical test device (7, 21), and to commonly start and/or stop a network test.

3. Test system according claim 2, wherein the central test coordinator (23) is configured to communicate directly with every single testing unit (3, 4, 13, 14, 30, 31) of a logical test device (7, 21) to transmit control commands to the testing units (3, 4, 13, 14, 30, 31).

4. Test system according to any one of the preceding claims, wherein at least one of the testing units (3, 4, 13, 14, 30, 31) comprises a local test coordinator, which is configured to coordinate the single testing units (3, 4, 13, 14, 30, 31), which form a logical test device (7, 21).

5. Test system according to any one of the preceding claims, wherein the testing units (3, 4, 13, 14, 30, 31) each comprise a test synchronizer (17, 18), which is configured to synchronize the respective testing unit (3, 4, 13, 14, 30, 31) with the other testing units (3, 4, 13, 14, 30, 31) in the coupled state.

6. Test system according to any one of the preceding claims, wherein each one of the testing units (3, 4, 13, 14, 30, 31) comprises a user equipment (13, 14) for the wireless network (2, 11) and an application (19, 20) installed on the user equipment (13, 14), which implements the functionality of the testing unit (3, 4, 13, 14, 30, 31).

7. Test system according to any one of the preceding claims, wherein the communication interfaces (5, 6, 15, 16) of the testing units (3, 4, 13, 14, 30, 31) are configured to connect to an infrastructure (12) of the wireless network (2, 11), and
wherein the communication interfaces (5, 6, 15, 16) of the testing units (3, 4, 13, 14, 30, 31) are configured to synchronize the data transmission in a coupled state such that the single communication interfaces (5, 6, 15, 16) appear to the network infrastructure (12) as a single communication interface (5, 6, 15, 16) of a user equipment of the wireless network (2, 11).

8. Test system according claim 7, wherein the testing units (3, 4, 13, 14, 30, 31) comprise a synchronization interface, which is configured to communicatively couple the testing units (3, 4, 13, 14, 30, 31), which form a logical test device (7, 21),
wherein the testing units (3, 4, 13, 14, 30, 31) are configured to evenly distribute between the testing units (3, 4, 13, 14, 30, 31) via the wired synchronization interface (32, 33) the data received via the communication interfaces (5, 6, 15, 16).

9. Test method for testing a wireless network (2, 11), the method comprising:
providing (S1) a plurality of single testing units (3, 4, 13, 14, 30, 31), each one of the testing units (3, 4, 13, 14, 30, 31) being configured to controllably perform network tests in the wireless network (2, 11),
coupling (S2) the testing units (3, 4, 13, 14, 30, 31) to form a single logical test device (7, 21),
performing (S3) a common network test in the wireless network (2, 11) and delivering a single test result (8, 22) with the single logical test device (7, 21).

10. Test method according claim 9, further comprising communicating from a central test coordinator (23) or a local test coordinator with the single testing units (3, 4, 13, 14, 30, 31) and controlling the single testing units (3, 4, 13, 14, 30, 31) to couple to each other to form the single logical test device (7, 21), and to commonly start and/or stop a network test.

11. Test method according claim 10, wherein communicating with the testing units (3, 4, 13, 14, 30, 31) comprises communicating directly with every single testing unit (3, 4, 13, 14, 30, 31) of a logical test device (7, 21) to transmit control commands to the testing units (3, 4, 13, 14, 30, 31).

12. Test method according to any one of the preceding claims 9 to 11, further comprising synchronizing the testing units (3, 4, 13, 14, 30, 31), which form a logical test device (7, 21).

13. Test method according to any one of the preceding claims 9 to 12, wherein the method is performed on a plurality of user equipments (13, 14) for the wireless network (2, 11) with an application (19, 20) installed on the user equipments (13, 14), which implements the functionality of the testing unit (3, 4, 13, 14, 30, 31).

14. Test method according to any one of the preceding claims 9 to 13, wherein the testing units (3, 4, 13, 14, 30, 31) synchronize the data transmission in a coupled state such that the single testing units (3, 4, 13, 14, 30, 31) appear to the network infrastructure (12) as a single user equipment of the wireless network (2, 11),

15. Test method according to any one of the preceding claims 9 to 14, wherein the testing units (3, 4, 13, 14, 30, 31) comprise a wired synchronization interface (32, 33), which communicatively couples the testing units (3, 4, 13, 14, 30, 31), which form a logical test device (7, 21), and wherein the testing units (3, 4, 13, 14, 30, 31) evenly distribute between the testing units (3, 4, 13, 14, 30, 31) via the wired synchronization interface (32, 33) received data.
